(19) **Europäisches Patentamt**
**European Patent Office**
**Office européen des brevets**

(11) **EP 1 828 682 B1**

(12) **EUROPÄISCHE PATENTSCHRIFT**

(45) Veröffentlichungstag und Bekanntmachung des Hinweises auf die Patenterteilung:
**12.02.2014 Patentblatt 2014/07**

(21) Anmeldenummer: **05819045.5**

(22) Anmeldetag: **19.12.2005**

(51) Int Cl.:
**F23N 3/00** (2006.01)

(86) Internationale Anmeldenummer:
**PCT/EP2005/056902**

(87) Internationale Veröffentlichungsnummer:
**WO 2006/067108 (29.06.2006 Gazette 2006/26)**

(54) **VERFAHREN UND VORRICHTUNG ZUR BEEINFLUSSUNG VON VERBRENNUNGSVORGÄNGEN**

METHOD AND DEVICE FOR INFLUENCING COMBUSTION PROCESSES

PROCEDE ET DISPOSITIF POUR INFLUENCER DES PROCESSUS DE COMBUSTION

(84) Benannte Vertragsstaaten:
**DE FR GB IT**

(30) Priorität: **20.12.2004 DE 102004061300**

(43) Veröffentlichungstag der Anmeldung:
**05.09.2007 Patentblatt 2007/36**

(73) Patentinhaber: **Siemens Aktiengesellschaft**
**80333 München (DE)**

(72) Erfinder:
• **HAMMER, Thomas**
**91334 Hemhofen (DE)**
• **LINS, Günter**
**91056 Erlangen (DE)**
• **VERLEGER, Jobst**
**91052 Erlangen (DE)**

(56) Entgegenhaltungen:
WO-A-03/081130    DE-A1- 10 137 683
DE-B- 1 274 781    US-A- 4 111 636

EP 1 828 682 B1

**Beschreibung**

Die Erfindung bezieht sich auf ein Verfahren zur Beeinflussung von Verbrennungsvorgängen gemäß dem Oberbegriff des Patentanspruches 1. Daneben bezieht sich die Erfindung auch auf eine zugehörige Vorrichtung zur Durchführung des Verfahrens.

Vorrichtungen und Verfahren zur Beeinflussung von Verbrennungsvorgängen durch elektrische Mittel sind aus zahlreichen Druckschriften bekannt. Der Einsatz elektrischer Mittel, insbesondere elektrischer Felder und Entladungen, zielt auf die Verbesserung der Stabilität des Verbrennungsprozesses, die Verminderung der Schadstoffemission und die Unterdrückung von Brennkammerschwingungen. Beispiele hierfür sind die WO 96/01394 A1 und die DE 101 37 683 C2.

Ferner offenbart US 4 111 636 A ein Verfahren zur Reduzierung von Schadstoffemissionen in gasförmigen Verbrennungsprodukten. Die Schadstoffemissionen werden dabei mittels eines elektrischen Feldes aus einer Verbrennungszone der Verbrennungsprodukte entfernt.

Auch DE 1 274 781 C offenbart ein Verfahren zur Verbesserung des Verbrennungswirkungsgrades bei einem Brenner, dessen Flamme von einem elektrischen Feld beeinflusst ist. Das elektrische Feld wird über elektrischen Kondensatoren erzeugt.

In der WO 96/01394 A1 werden Elektrodenanordnungen angegeben, die in einer Brennkammer im Bereich der dort brennenden Flamme angeordnet sind, mit Spannungen unterschiedlichen zeitlichen Verlaufs beaufschlagt werden und einen Einfluss im Sinne einer verminderten Emission schädlicher Substanzen wie Ruß, Kohlendioxid, unverbrannter organischer Substanzen und Stickstoffverbindungen bewirken sollen.

Die DE 101 37 683 C2 verfolgt neben dem Zweck der Schadstoffminderung das Ziel, die Stabilität der Verbrennung zu verbessern und insbesondere thermoakustische Emissionen zu unterdrücken. Die dazu eingesetzten Mittel unterscheiden sich von den in der WO 96/01394 A1 beschriebenen dadurch, dass die Elektroden auf der der Flamme abgewandten Seite der Brennkammer angebracht sind.

Ein wesentlicher Vorteil der Beeinflussung von Flammen durch elektrische Felder und Entladungen besteht darin, dass sich das Verfahren zur trägheitslosen Steuerung und Regelung von Verbrennungsprozessen nutzen lässt. Dies setzt voraus, dass Sensoren vorhanden sind, die die zu beeinflussenden Größen erfassen.

Sensoren zur Aufnahme von Signalen unterschiedlicher Art aus Flammen sind in zahlreichen Ausführungsformen bekannt. Im vorliegenden Zusammenhang sind solche Sensoren relevant, die aus Elektroden bestehen, die in die Flamme oder in die Nähe der Flamme gebracht werden, um elektrische Eigenschaften der Flamme zu messen.

Ein Beispiel hierfür findet sich in der US 5 049 063 A, in der eine in die Flammenspitze hinein reichende Elektrode beschrieben wird, die zur Messung eines Ionenstroms herangezogen wird. Eine Ionisationselektrode ist auch bei der DE 196 32 983 C2 vorhanden, die eine Regeleinrichtung für einen Gasbrenner betrifft. Bei beiden Dokumenten wird in Verbindung mit geeigneten Verstärkern und Filtern das durch die Sonde erzeugte Signal benutzt, um den Verbrennungsprozess, beispielsweise durch Einflussnahme auf die Luft- oder Gaszufuhr mittels eines Regelventils, in vorteilhafter Weise zu steuern. Die Sonde selbst dient dabei ausschließlich zur Detektion von Flammeneigenschaften und wird selbst nicht zur Beeinflussung des Verbrennungsprozesses benutzt. Weiterhin ist aus der EP 0 775 870 B1 eine Vorrichtung zur Dämpfung thermoakustischer Schwingungen insbesondere einer Brennkammer für eine Gasturbine mit elektrisch beeinflussbarer Brennkammer bekannt, bei der ein in der Brennkammer installierter Drucksensor Druckschwingungen erfasst und ein Signal für eine Elektrode in der Brennkammer zwecks elektronischer Steuerung der Flamme generiert.

Ein Nachteil der herkömmlichen Technik liegt darin, dass die Einwirkung auf den Verbrennungsvorgang über mechanische Systeme wie Ventile erfolgt, die dem Verschleiß unterliegen und eine Reaktionszeit aufweisen, die insbesondere zur Beherrschung von Brennkammerschwingungen zu lang sein kann.

Aufgabe der Erfindung ist es daher, das Verfahren des Standes der Technik soweit zu ergänzen, dass eine verbesserte Beeinflussung des Verbrennungsvorganges möglich ist. Daneben soll eine zugehörige Vorrichtung geschaffen werden.

Die Aufgabe ist erfindungsgemäß durch die Maßnahmen des Patentanspruches 1 gelöst. Eine zugehörige Vorrichtung ist im Anspruch 7 angegeben. Weiterbildungen des Verfahrens und der Vorrichtung sind Gegenstand der abhängigen Ansprüche.

Der Erfindungsgedanke besteht darin,

- Elektroden, die zur Beeinflussung der Verbrennung durch elektrische Felder und Entladungen, wie beispielsweise im Sinne der DE 101 37 683 C2, in einer Brennkammer installiert werden, auch zur Detektion von Flammeneigenschaften einzusetzen

- bzw. eine oder mehrere in einer Brennkammer bereits vorhandene Elektroden, die der Detektion von Flammeneigenschaften dienen, als Elektroden zur Erzeugung eines elektrischen Feldes oder einer elektrischen Gasentladung zu benutzen, die die Verbrennung im oben genannten Sinne beeinflussen.

Dabei ist entscheidend, dass die Elektroden gleichzeitig sowohl als Sonden zur Detektion von Flammeneigenschaften als auch als aktive Feldelektroden zur Beeinflussung der Flammeneigenschaften dienen und die mittels dieser Elektroden erzeugten Sondensignale ohne Beteiligung mechanischer Elemente trägheitslos auf die an den Elektroden anliegende Spannung zur Verbrennungssteuerung zurückwirken. Separate Sonden zur Signalerfassung sind nicht notwendig.

Die Erfindung ist in unterschiedlichen Gebieten anwendbar. Dabei ist im industriellen Bereich eine Anwendung insbesondere bei Gasturbinen, aber auch bei prozesstechnisch eingesetzten Brennern möglich. Bei den dort auftretenden hohen thermischen Belastungen erweist sich eine einzige Durchführung als besonders vorteilhaft. Darüber hinaus ist auch die Anwendung der Erfindung im Haustechnikbereich für Heizung und Warmwasseraufbereitung, bei dem es um Kostenreduzierung geht, vorteilhaft. Während bei der industriellen Nutzung die Schadstoffminderung von besonderer Bedeutung ist, wird im Haustechnikbereich die Brennstoffausnutzung und Geruchsminderung im Vordergrund stehen.

Bei der Erfindung gibt es keinerlei Einschränkungen hinsichtlich Art des Brennstoffes (Erdgas, Synthesegas, Öl), Brennstoff-Luft-Gemische (brennstoffarm, stöchiometrisch, oder brennstofffreich) und/oder Anzahl sowie Art der gesteuerten Flammen (Diffusionsflammen, teilvorgemischte Flammen, Vormischflammen) im Brenner.

Die Erfindung nutzt die Tatsache aus, dass ein elektrisches Feld in einer Flamme einen Ladungsträgertransport hervorruft, der einen elektrischen Strom zwischen den felderzeugenden Elektroden bewirkt. Stärke, zeitlicher Verlauf und Frequenz des elektrischen Stroms hängen sowohl für die Sondenmessung als auch für die elektrische Steuerung einerseits von der aufgeprägten Spannung, andererseits von den Eigenschaften der Flamme, insbesondere von deren Leitfähigkeit und ihrer räumlichen Verteilung, ab. Der Zusammenhang zwischen der an den Elektroden anliegenden Spannung und der Stärke des dadurch hervorgerufenen Stroms lässt sich durch eine Strom-Spannungskennline, die nachfolgend auch als Sondenkennlinie bezeichnet wird, verdeutlichen, die weiter unten im Einzelnen beschrieben wird.

Die Erfindung umfasst das Anlegen einer zeitlich veränderlichen Spannung zur Steuerung der Verbrennung, wobei der dadurch hervorgerufene zeitveränderliche Strom direkt zur Diagnostik des Verbrennungsprozesses herangezogen wird. Sie beinhaltet ferner das Aufprägen einer periodischen Sondenspannung ("probe voltage") auf die Steuerspannung ("control voltage"), wobei die Grundfrequenz der Sondenspannung hoch gegenüber typischen Signalfrequenzen der Steuerspannung ist, und die Trennung des Sondenstromes vom Steuerstrom anhand einer Frequenzweiche. In einer besonders vorteilhaften Ausführungsform beinhaltet die Erfindung die Anwendung amplitudenmodulierter, hochfrequenter Spannungen für Steuerung und Analyse, wobei die diodenartige Kennlinie, d.h. die Asymmetrie des Verhaltens hinsichtlich positiver und negativer Polarität, von Elektrodensystemen in Flammen ausgenutzt wird.

Die Erfindung umfasst weiter die Anwendung von Mehrelektrodensystemen, die von einer gemeinsamen oder aber von jeweils einer oder mehreren Elektroden zugeordneten, geregelten Spannungsquellen versorgt werden. Die Vorteile eines Mehrelektrodensystems liegen insbesondere darin, dass räumlich aufgelöste Messungen möglich sind und die Verbrennung über einen ausgedehnten Lastbereich mit stark variierender räumlicher Struktur gesteuert werden kann.

Die Erfindung bezieht sich ferner auf Kombinationen von Systemen, bei denen mindestens eine Elektrode sowohl als Feldund Messelektrode im Sinne des oben ausgeführten Erfindungsgedankens wirkt und mindestens eine weitere Elektrode ausschließlich als Messelektrode oder Feldelektrode eingesetzt ist.

Schließlich erstreckt sich die Erfindung speziell auf eine solche, im vorangehenden Absatz genannte Kombination, bei der eine oder mehrere Elektroden zeitweilig ausschließlich als Messelektrode oder als Feldelektrode wirken.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen

Figur 1                       die bereits erwähnte Kennlinie,
Figur 2 und Figur 3   in schematischer Darstellung zwei Alternativen eines turbinenartigen Brenners mit zugehörigen Mitteln zur Diagnose und Beeinflussung des Verbrennungsvorganges,
Figur 4                       eine Strom-Spannungs-Kennlinie und
Figur 5                       den zeitlichen Verlauf der Spannung für Steuerungszwecke.

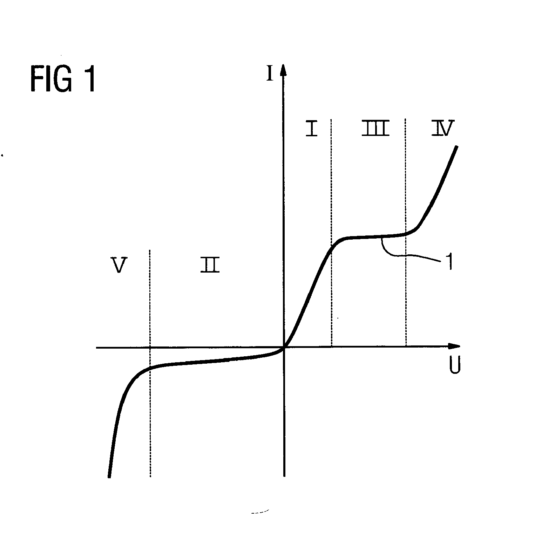

Figur 1 zeigt ein Beispiel einer Sondenkennlinie 1. Bei Anlegen kleiner Spannungen positiver Polarität ergibt sich eine stetig mit der Spannung ansteigende, dieser proportionale Stromstärke. Im Bereich I resultiert daraus ein linearer Abschnitt der Kennlinie 1, in dem die Drift der in der Reaktionszone der Verbrennung gebildeten Ionen und Elektronen einen Stromfluss in der Hochspannungselektrode induziert. Bei fortschreitendem Anstieg der Spannung werden durch Ladungstrennung Raumladungsschichten gebildet, welche die Stromstärke oberhalb einer gewissen Spannung auf den Sättigungsstrom begrenzen, der von der Ionisationsrate in der Reaktionszone der Verbrennung abhängt. Der dadurch charakterisierte Bereich wird als Sättigungsbereich III bezeichnet. Anschließend erfolgt im Bereich IV wiederum ein Anstieg der Sondenkennlinie 1.

Bei Spannungen negativer Polarität ergeben sich deutlich kleinere Sondenströme als bei positiver Polarität, und wegen der hohen Elektronenbeweglichkeit geht das Signal sehr viel schneller in eine Sättigung, so dass linearer Bereich und Sättigungsbereich nicht deutlich von einander getrennt erscheinen. Der Bereich II umfasst deshalb den linearen Teil und den Sättigungsbereich der Sondenkennlinie 1 für negative Polarität.

Für positive Polarität wurde bereits der Sättigungsbereich III definiert. Bei weiterer betragsmäßiger Erhöhung der Spannung werden die elektrischen Feldstärken so hoch, dass Elektronenvermehrung durch ionisierende Stöße einsetzt. Die sich im bereits erwähnten Bereich IV anschließenden Kennlinienabschnitte sind durch selbständige Gasentladungseffekte geprägt. Sinngemäß Gleiches gilt sinngemäß für die negative Polarität im Bereich V.

Je nach Druck, Temperatur, Gaszusammensetzung und Platzierung der Elektroden kann die Sondenkennlinie 1 von dem hier gezeigten Beispiel deutlich abweichen und können sich andere Kennlinien ergeben. Insbesondere kann z.B. der Sättigungsbereich II wegfallen, weil durch inhomogene elektrische Felder Gasentladungseffekte bereits bei Spannungen unterhalb der Sättigungsspannung auftreten.

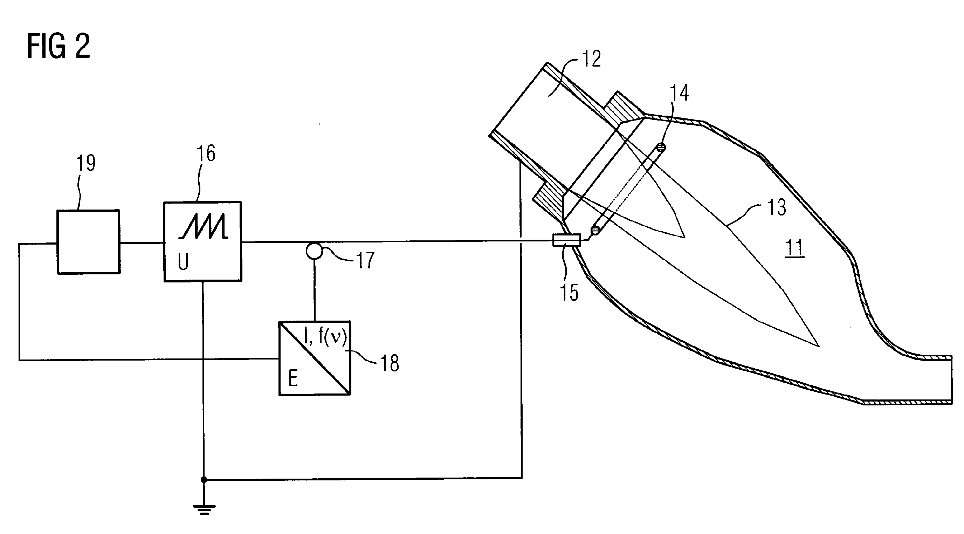

Im Ausführungsbeispiel der Figur 2 ist ein in einer Brennkammer 11 angeordneter, als elektrisch leitend gedachter Brenner 12 dargestellt, in dem eine Flamme 13 brennt. Im Bereich der Flamme ist eine Ringelektrode 14 angeordnet, welche die Flamme 13 umschließt und über eine Durchführung 15 durch die Brennkammerwand mit einem Spannungsversorgungsgerät 16 derart verbunden ist, dass zwischen der Elektrode 14 und dem Brenner 12 die vom Gerät 16 bereitgestellte zeitlich veränderliche Spannung U(t) anliegt, die in diesem Beispiel als Sägezahnspannung gewählt ist. Ein Messwertaufnehmer 17 erfasst den durch die Spannung zwischen Brenner 12 und Elektrode 14 in der Flamme erzeugten Strom, wobei die Stromstärke I und das Frequenzspektrum $f(v)$ registriert werden. In einem Messumformer 18, an dessen Stelle auch ein Steuerungsrechner treten kann, werden die erfassten Größen I und $f(v)$ in ein elektrisches Signal E umgesetzt, das mit Hilfe des Reglers 19 zur Regelung der Spannung bezüglich Amplitude, Pulsform und Frequenz im Spannungsversorgungsgerät 16 benutzt wird. Entfernt sich die gemessene Stromstärke aus dem von den Betriebsbedingungen des Brenners 12 abhängigen Sollbereich oder treten Stromschwankungen in einem nicht erwünschten Frequenzbereich auf, werden Amplitude, Pulsform und Frequenz der Spannung U(t) sowie ihre Phase bezüglich des Messsignals so geregelt, dass die an den Elektroden gemessenen Eigenschaften wieder im Sollbereich liegen.

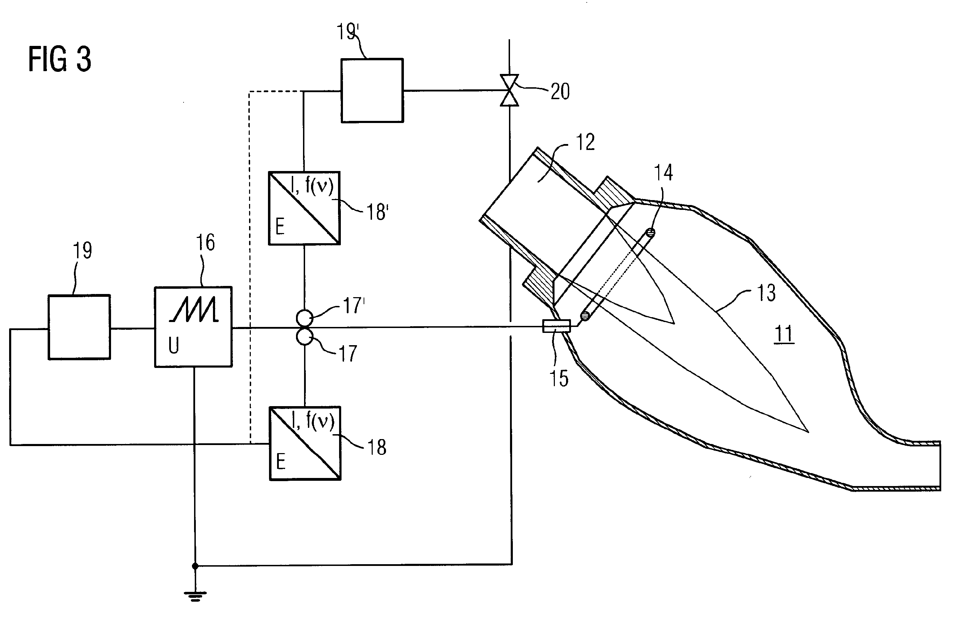

Das anhand der Figur 2 beschriebene Beispiel schließt die Anwendung der mittels der Feldelektroden erzeugten Sondensignale zur Steuerung mechanischer Elemente, insbesondere von Ventilen, ein. Dies wird im Ausführungsbeispiel der Figur 3 verdeutlicht, das zusätzlich zu den Elementen der Figur 2 jeweils einen weiteren Messwertaufnehmer 17', einen weiteren Messwertumformer 18', einen weiteren Regler 19' sowie ein Regelventil 20 aufweist, mit welchem beispielsweise die Luftzufuhr des Brenners 12 verändert werden kann. Das Steuerungssignal für das Ventil 20 kann auch vom ersten Messwertumformer 18 abgeleitet werden, wie es in Figur 3 durch eine gestrichelte Linie angedeutet ist.

Tritt an die Stelle des Messwertumformers 18 ein Steuerungsrechner, wird dieser in Kombination mit dem Elektrodensystem dazu benutzt, einen Abschnitt der Strom-Spannungskennlinie 1 der Flamme unter den aktuell herrschenden Bedingungen zu bestimmen, mit einer im Speicher eines hier nicht im Einzelnen beschriebenen Rechners hinterlegten Soll-Kennlinie zu vergleichen und nötigenfalls die Bedingungen so zu verändern, dass die tatsächliche Kennlinie sich der Sollkennlinie annähert und mit dieser weitgehend identisch wird.

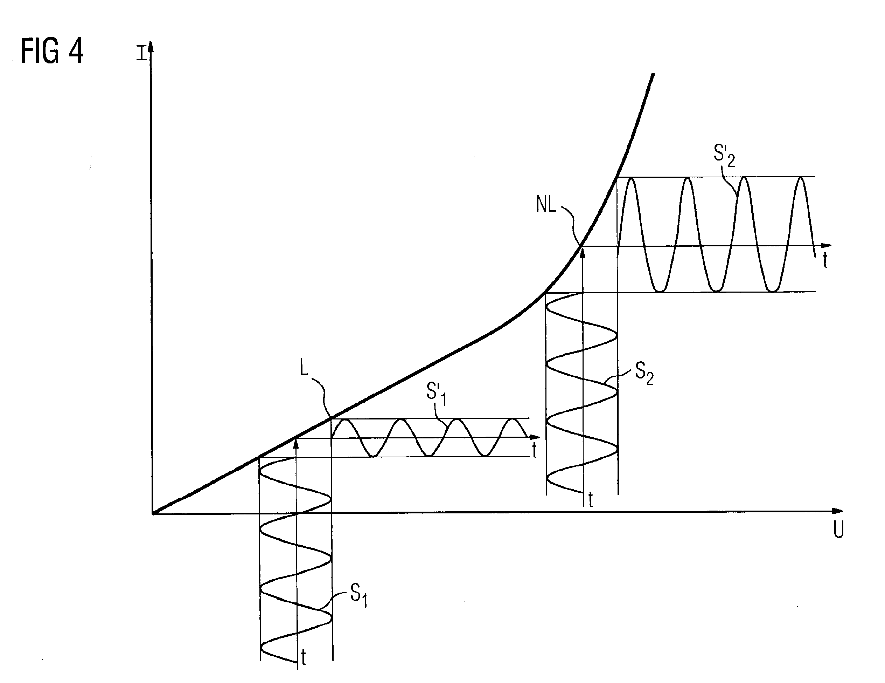

Das der Kennlinienmessung zugrunde liegende Prinzip wird an Hand der Figur 4 verdeutlicht, in der in vereinfachter Darstellung lediglich jeweils ein linearer Bereich L und ein nichtlinearer Bereich NL der Strom-Spannungskennlinie 1 einer Flamme gezeigt wird. Zwischen den Elektroden wird eine Steuerspannung $U_0$ angelegt, der eine weitere, periodisch veränderliche, hier beispielhaft als sinusförmig ($U_1 = U_{10} \cdot \sin \omega t$) dargestellte Sondenspannung überlagert ist, so dass Gleichung (1) gilt:

$$U(t) = U_0 + U_{10} \cdot \sin(\omega t) \qquad\qquad (1)$$

Liegt die Gesamtspannung U(t) im linearen Bereich der Kennlinie, wobei dieser Fall in Figur 4 durch das Signal $S_1$ dargestellt ist, wird ein Strom gemäß dem Signal $S'_1$ bewirkt, wobei der Strom dem Spannungssignal $S_1$ proportional ist. Dabei ist die Amplitude von $S_1$ ein Maß für die Steilheit der Kennlinie. Liegt die Gesamtspannung im nichtlinearen Bereich der Kennlinie (Signal $S_2$), ist das Stromsignal $S'_2$ im Vergleich zum Spannungssignal $S_2$ verzerrt, wobei die - beispielsweise durch Fourier-Analyse - quantifizierbare Verzerrung ein Maß für die Krümmung der Kennlinie ist.

Das hier nicht im Einzelnen dargestellte Ersatzschaltbild der Kombination aus Flamme und Elektrodensystem enthält neben einer resistiven auch eine kapazitive Komponente. Dadurch bedingt, tritt zwischen den Signalen $S_1$ und $S'_1$ bzw. zwischen den Signalen $S_2$ und $S'_2$ eine Phasenverschiebung $\Delta\varphi$ auf, die ebenfalls detektiert und im Sinne einer Flammensteuerung ausgewertet wird.

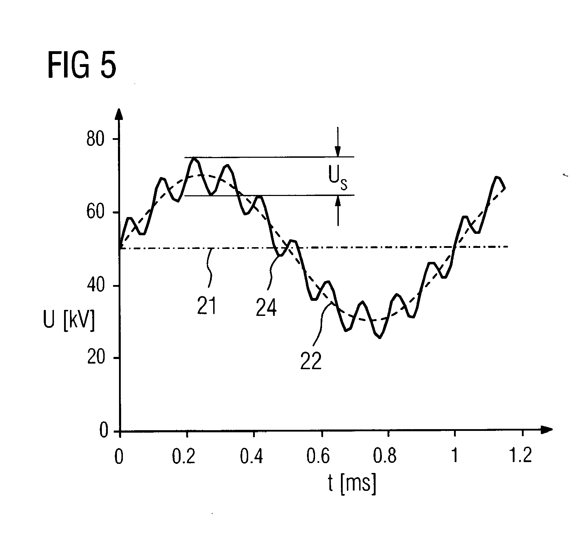

Figur 5 stellt ein weiteres Beispiel für den zeitlichen Verlauf einer Spannung für Steuerung und "Sondierung" eines Verbrennungsprozesses dar, mit der eine Hochspannungselektrode gegenüber der elektrischen Masse beaufschlagt wird. Wenn ein Brenner mit Luftzahlen oder Massenströmen außerhalb seines Optimums betrieben wird, kann für die dauerhafte Reduzierung von Schadstoffemissionen und zur Stabilisierung der Verbrennung eine Gleichspannung 21 angelegt werden. Für die Unterdrückung von Verbrennungsschwingungen können der Gleichspannung 21 Wechselspannungen mit Frequenzen im Bereich 1 Hz bis 10 kHz überlagert werden, so dass die Steuerspannung 22 aus einer Wechselspannung mit einem Offset besteht. Um Zustandsänderungen schnell diagnostizieren zu können, wird der Steuerspannung eine periodische Sondenspannung $U_S$ (t) aufgeprägt, deren Frequenz groß und deren Amplitude klein gegenüber der der Steuerspannung ist. Dadurch ergibt sich eine Elektrodenspannung 24, die für Steuerungszwecke eine Gleichspannungskomponente und eine Wechselspannungskomponente und zur Verbrennungsdiagnostik eine Wechselspannungskomponente in einem Frequenzbereich enthält, der nicht für Steuerungszwecke benötigt wird. Deshalb können Messsignale mit Hilfe einfacher elektronischer Mittel, wie insbesondere Bandpassfilter oder anderer Anordnungen aus Drosseln, Widerständen und Kondensatoren, von Steuersignalen getrennt werden. Außerdem ist durch kapazitive Ankoppelung von Messaufnehmern eine einfache Potentialtrennung möglich.

Über vorstehend beschriebene Beispiele hinaus ist in weiteren Beispielen eine Anwendung von Spannungen, die den gesamten in Figur 1 gezeigten, für die Kennlinie einer Flamme relevanten Spannungsbereich abdecken, möglich. Auch die Anwendung von hochfrequenten Wechselspannungen, wobei die diodenartige Kennlinie 1 aus Figur 1 genutzt wird, ist möglich, um im periodischen Mittel einen unipolaren Strom zu erhalten.

Der aus den einzelnen Beispielen entnehmbare allgemeine Erfindungsgedanke beschränkt sich aber nicht auf die in den Figuren 2 und 3 lediglich beispielhaft beschriebenen, innerhalb einer Brennkammer angeordneten toroidalen, bezüglich des Brenners koaxialen, Ringelektroden. Weitere Ausführungsformen umfassen vielmehr zylindrische Ringelektroden, Nadelelektroden, Kugelelektroden und Stabelektroden sowie Kombinationen der genannten Formen, wobei die Elektroden sämtlicher Ausführungsformen mit einem nicht leitenden, dielektrisch wirkenden oder mit einem resistiv-strombegrenzenden, insbesondere ionenleitenden keramischen Material beschichtet sein können.

Es ist ersichtlich, dass bei einer elektrisch isolierenden Ummantelung der Elektroden die Steuerspannung als Wechselspannung oder Impulsspannung eingeprägt sein muss. Hierzu wird insbesondere auf die eingangs zitierte DE 101 37 683 C2 verwiesen.

## Patentansprüche

1. Verfahren zur Beeinflussung von Verbrennungsvorgängen, bei dem elektrische Mittel zur Führung von wenigstens einer Flamme (13) und/oder Änderung von Flammeneigenschaften eingesetzt werden, wobei der durch den Ladungstransport in der Flamme (13) bewirkte elektrische Strom zwischen den felderzeugenden Elektroden zur Erzeugung eines elektrischen Signals (E) genutzt wird, mit folgenden Merkmalen:

   - die wenigstens eine Flamme (13) wird durch Anlegen einer Spannung an Elektroden der Einwirkung eines elektrischen Feldes ausgesetzt,
   - die Elektroden werden gleichzeitig sowohl als Sonden zur Detektion von Flammeneigenschaften als auch als aktive Feldelektroden zur Beeinflussung der Flammeigenschaften verwendet, **dadurch gekennzeichnet, dass**
   - die so erzeugten Sondensignale ohne Beteiligung mechanischer Elemente trägheitslos auf die zur Verbrennungssteuerung an den Elektroden anliegende Spannung zurückwirken.

2. Verfahren nach Anspruch 1, **dadurch gekennzeichnet, dass** Amplitude, zeitlicher Verlauf und Frequenz des Sondensignals zur Steuerung der Spannungsversorgung der felderzeugenden Elektroden herangezogen werden.

3. Verfahren nach Anspruch 2, **dadurch gekennzeichnet, dass** zur Auswertung der Frequenz des Sondensignals eine Fourier-Analyse des Sondensignals durchgeführt wird.

4. Verfahren nach einem der Ansprüche 1 bis 3, **dadurch gekennzeichnet, dass** als an den Elektroden angelegte Spannung eine Gleichspannung mit überlagerter Wechselspannung verwendet wird.

5. Verfahren nach einem der Ansprüche 1 bis 4, **dadurch gekennzeichnet, dass** der Steuerspannung eine periodische Sondenspannung, deren Frequenz groß und deren Amplitude klein gegenüber der Steuerspannung ist, aufgeprägt wird.

6. Verfahren nach einem der vorhergehenden Ansprüche, **gekennzeichnet durch** die Anwendung bei einer Gasturbine.

7. Verfahren nach einem der vorhergehenden Ansprüche, **gekennzeichnet durch** die Anwendung bei einem Industriebrenner.

8. Verfahren nach einem der vorhergehenden Ansprüche, **gekennzeichnet durch** die Anwendung bei einem Haushaltsbrenner.

9. Vorrichtung zur Durchführung des Verfahrens nach Anspruch 1 oder einem der Ansprüche 2 bis 8, mit einem Brenner (12) und dem Brenner (12) zugeordneten Elektroden, wobei der Brenner (12) aus metallischem Material die erste Elektrode darstellt und eine zweite Elektrode sowie ein Spannungsversorgungsgerät (16) vorhanden sind, wobei das Spannungsversorgungsgerät (16) eine zeitlich veränderliche Spannung (U(t)) liefert und dass wenigstens ein Messwertaufnehmer (17, 17') vorhanden ist, der den durch die Spannung zwischen den beiden Elektroden (12, 14) in der Flamme (13) erzeugten Strom (I = f (U)) erfasst, und wobei der Messwertaufnehmer (17, 17') den durch die Spannung zwischen Brenner (12) und Elektrode in der Flamme (13) erzeugten Strom erfasst, **dadurch gekennzeichnet, dass** die Stromstärke (I) und das Frequenzspektrum (f(v)) registriert werden, dass die erfasste Stromstärke (I) und das erfasste Frequenzspektrum (f(v)) in einem Messumformer (8, 8') in ein elektrisches Signal (E) umgesetzt werden, das mit Hilfe eines Reglers (19, 19') zur Regelung der Spannung bezüglich Amplitude, Pulsform und Frequenz im Spannungsversorgungsgerät (16) benutzt wird.

10. Vorrichtung nach Anspruch 9 oder Anspruch 9, **dadurch gekennzeichnet, dass** der Messumformer (8, 8') zur Umsetzung der Messgrößen (I, f(v)) in ein elektrisches Signal (E) und zur Rückkopplung des elektrischen Signals (E) in das Spannungsversorgungsgerät (6) ausgebildet ist.

11. Vorrichtung nach einem der Ansprüche 9 bis 10, **dadurch gekennzeichnet, dass** ein Steuerungsrechner vorhanden ist.

12. Vorrichtung nach einem der Ansprüche 9 bis 11, **gekennzeichnet durch** abgespeicherte Kennlinien als Führungsgrößen zur Steuerung des Spannungsversorgungsgerätes (16), welche im Gerät oder im Speicher des Rechners hinterlegt ist.

13. Vorrichtung nach einem der Ansprüche 9 bis 12, **dadurch gekennzeichnet, dass** für die Erzeugung der Steuerund Sondenspannung an den Elektroden (12, 14) Mittel zur Überlagerung von Gleich- und Wechselspannung vorhanden sind.

14. Vorrichtung nach einem der Ansprüche 9 bis 13, **dadurch gekennzeichnet, dass** dem Messwertaufnehmer (17, 17') Mittel zur Trennung von Steuerspannung und Sondensignal zugeordnet sind.

15. Vorrichtung nach einem der Ansprüche 9 bis 14, **gekennzeichnet durch** die Ansteuerung mechanischer Aktoren für den Brenner (12) **durch** das Steuerungssignal.

16. Vorrichtung nach einem der Ansprüche 9 bis 15, **dadurch gekennzeichnet, dass** durch das Steuerungssignal ein Ventil (20) angesteuert wird.

17. Vorrichtung nach einem der Ansprüche 9 bis 16, **dadurch gekennzeichnet, dass** wenigstens die zweite Elektrode (14) mit keramischem Material ummantelt ist

18. Vorrichtung nach einem der Ansprüche 9 bis 17, **dadurch gekennzeichnet, dass** der Brenner (12) durch eine Abschirmung aus ionenleitendem Material umgeben ist, wobei eine Durchführung (15) zur Spannungsversorgung der zweiten Elektrode (14) vorhanden ist.

**Claims**

1. Method for influencing combustion processes, in which electrical means are used for controlling at least one flame (13) and/or modifying flame characteristics, the electrical current between the field-generating electrodes produced by the charge transfer in the flame (13) being used to generate an electrical signal (E), having the following features:

   - the at least one flame (13) is exposed to the effect of an electrical field by applying a voltage to electrodes,
   - the electrodes are simultaneously used both as probes for the detection of flame characteristics and as active field electrodes for influencing the flame characteristics, **characterized in that**
   - the probe signals thus generated have a feedback effect, without any response time lag, on the voltage present on the electrodes, in order to control the combustion without the involvement of mechanical elements.

2. Method according to Claim 1, **characterized in that** the amplitude, time profile and frequency of the probe signal are used for controlling the voltage supply of the field-generating electrodes.

3. Method according to Claim 2, **characterized in that** a Fourier analysis of the probe signal is performed for evaluating the frequency of the probe signal.

4. Method according to any one of Claims 1 to 3, **characterized in that** a dc voltage with superimposed ac voltage is used as voltage applied to the electrodes.

5. Method according to any one of Claims 1 to 4, **characterized in that** a periodic probe voltage having a high frequency and a low amplitude compared to the control voltage is impressed upon the control voltage.

6. Method according to any one of the preceding claims, **characterized by** the use in a gas turbine.

7. Method according to any one of the preceding claims, **characterized by** the use in an industrial burner.

8. Method according to any one of the preceding claims, **characterized by** the use in a domestic burner.

9. Device for performing the method according to Claim 1 or any one of Claims 2 to 8, having a burner (12) and electrodes assigned to the burner (12), the burner (12) of metallic material constituting the first electrode and a second electrode being provided together with a voltage supply unit (16), the voltage supply unit (16) delivering a voltage (U(t)) varying over time and at least one sensor (17, 17') being provided, which registers the current (I = f (U)) generated by the voltage between the two electrodes (12, 14) in the flame (13), and the sensor (17, 17') detecting the current generated by the voltage between the burner (12) and the electrode in the flame (13), **characterized in that** the current strength (I) and the frequency spectrum (f(v)) are registered, and **in that** the detected current strength (I) and the detected frequency spectrum (f(v)) are converted in a measuring transducer (8, 8') into an electrical signal (E), which with the aid of a control unit (19, 19') is used in the voltage supply unit (16) to regulate the voltage in respect of the amplitude, pulse shape and frequency.

10. Device according to Claim 9, **characterized in that** the measuring transducer (8, 8') is designed for converting the measured variables (I, (f(v)) into an electrical signal (E) and for feeding back the electrical signal (E) to the voltage supply unit (6).

11. Device according to any one of Claims 9 to 10, **characterized in that** a control computer is provided.

12. Device according to any one of Claims 9 to 11, **characterized by** stored characteristic curves as control variables for controlling the voltage supply unit (16), which are filed in the unit or in the computer memory.

13. Device according to any one of Claims 9 to 12, **characterized in that** means for the superimposition of dc and ac voltage are provided for generating the control and probe voltage on the electrodes (12, 14).

14. Device according to any one of Claims 9 to 13, **characterized in that** means for separating the control voltage and the probe signal are assigned to the sensor (17, 17').

15. Device according to any one of Claims 9 to 14, **characterized by** the activation of mechanical actuators for the burner (12) by the control signal.

16. Device according to any one of Claims 9 to 15, **characterized in that** the control signal actuates a valve (20).

17. Device according to any one of Claims 9 to 16, **characterized in that** at least the second electrode (14) is sheathed in ceramic material.

18. Device according to any one of Claims 9 to 17, **characterized in that** the burner (12) is enclosed by a shield of ion-conducting material, a through-bushing (15) being provided for the voltage supply of the second electrode (14).

**Revendications**

1. Procédé pour influencer des processus de combustion, dans lequel on utilise des moyens électriques pour guider au moins une flamme ( 13 ) et/ou pour modifier des propriétés d'une flamme, en utilisant le courant électrique, entre des électrodes produisant un champ provoqué par le transport de charge dans la flamme ( 13 ), pour la production d'un signal ( E ) électrique, ayant les caractéristiques suivantes :

   - on soumet la au moins une flamme ( 13 ) à l'action d'un champ électrique par application d'une tension aux électrodes,
   - on utilise les électrodes en même temps, à la fois comme sondes de détection de propriétés d'une flamme et comme électrodes de champ actives pour influencer les propriétés d'une flamme, **caractérisé en ce que**
   - les signaux de sondes ainsi produits rétroagissent, sans participation d'éléments mécaniques et sans inertie, sur la tension s'appliquant aux électrodes, pour se rendre maître de la combustion.

2. Procédé suivant la revendication 1, **caractérisé en ce que** l'on tire parti de l'amplitude, de la variation en fonction du temps et de la fréquence du signal de sonde, pour commander l'alimentation en tension des électrodes produisant un champ.

3. Procédé suivant la revendication 2, **caractérisé en ce que**, pour exploiter la fréquence du signal de sonde, on effectue une analyse de Fourier du signal de sonde.

4. Procédé suivant l'une des revendications 1 à 3, **caractérisé en ce que** l'on utilise, comme tension appliquée aux électrodes, une tension continue avec une tension alternative superposée.

5. Procédé suivant l'une des revendications 1 à 4, **caractérisé en ce que** la tension de commande imprime une tension de sonde périodique dont la fréquence est haute et dont l'amplitude est petite par rapport à la tension de commande.

6. Procédé suivant l'une des revendications précédentes, **caractérisé par** son utilisation dans une turbine à gaz.

7. Procédé suivant l'une des revendications précédentes, **caractérisé par** son utilisation dans un brûleur industriel.

8. Procédé suivant l'une des revendications précédentes, **caractérisé par** son utilisation dans un brûleur domestique.

9. Dispositif pour la mise en oeuvre du procédé suivant la revendication 1 ou suivant l'une des revendications 2 à 8, comprenant un brûleur ( 12 ) et des électrodes associées au brûleur ( 12 ), le brûleur ( 12 ) en matériau métallique représentant la première électrode et il y a une deuxième électrode ainsi qu'un appareil ( 16 ) d'alimentation en tension, dans lequel l'appareil ( 16 ) d'alimentation en tension fournit une tension ( U( t ) ) qui varie dans le temps et en ce qu'il y a au moins un enregistreur ( 17, 17' ) de valeurs de mesure qui détecte le courant ( I = f( U ) ) produit dans la flamme ( 13 ) par la tension entre les deux électrodes ( 12, 14 ), et dans lequel l'enregistreur ( 17, 17' ) de valeurs de mesure détecte le courant produit dans la flamme ( 13 ) par la tension entre le brûleur ( 12 ) et les électrodes, **caractérisé en ce que** l'intensité ( I ) du courant et le spectre ( f ( ν ) ) de fréquence sont enregistrés, **en ce que** l'intensité ( I ) du courant détecté et le spectre ( f( ν ) ) de fréquence détecté sont transformés dans un transducteur ( 8, 8' ) de mesure en un signal ( E ) électrique, qui est utilisé à l'aide d'un régulateur ( 19, 19' ) pour la régulation de la tension en ce qui concerne l'amplitude, la forme des impulsions et la fréquence dans l'appareil ( 16 ) d'alimentation en tension.

10. Dispositif suivant la revendication 9, **caractérisé en ce que** le transducteur ( 8, 8' ) de mesure est constitué pour transformer les grandeurs ( I, f( ν ) ) de mesure en un signal ( E ) électrique et pour faire rétroagir le signal ( E ) électrique dans l'appareil ( 6 ) d'alimentation en tension.

11. Dispositif suivant l'une des revendications 9 à 10, **caractérisé en ce qu'**il y a un ordinateur de commande.

12. Dispositif suivant l'une des revendications 9 à 11, **caractérisé par** des courbes caractéristiques mémorisées comme grandeurs de commande pour la commande de l'appareil ( 16 ) d'alimentation en tension, courbes qui sont mémorisées dans l'appareil ou dans la mémoire de l'ordinateur.

13. Dispositif suivant l'une des revendications 9 à 12, **caractérisé en ce qu'**il y a, pour la production de la tension de commande et de la tension de sonde sur les électrodes ( 12, 14 ), des moyens de superposition d'une tension continue et d'une tension alternative.

**14.** Dispositif suivant l'une des revendications 9 à 13, **caractérisé en ce que** des moyens de séparation de la tension de commande et du signal de sonde sont associés à l'enregistreur ( 17, 17' ) de valeurs de mesure.

**15.** Dispositif suivant l'une des revendications 9 à 14, **caractérisé par** la commande d'actionneurs mécaniques du brûleur ( 12 ) par le signal de commande.

**16.** Dispositif suivant l'une des revendications 9 à 15, **caractérisé en ce qu'**une vanne ( 20 ) est commandée par le signal de commande.

**17.** Dispositif suivant l'une des revendications 9 à 16, **caractérisé en ce qu'**au moins la deuxième électrode ( 14 ) est enrobée d'un matériau céramique.

**18.** Dispositif suivant l'une des revendications 9 à 17, **caractérisé en ce que** brûleur ( 12 ) est entouré d'un blindage en matériau conducteur des ions, une traversée (15) pour l'alimentation en tension de la deuxième électrode ( 14 ) étant prévue.

FIG 1

# FIG 2

EP 1 828 682 B1

FIG 3

EP 1 828 682 B1

FIG 4

## FIG 5

EP 1 828 682 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9601394 A1
- DE 10137683 C2
- US 4111636 A
- DE 1274781 C
- US 5049063 A
- DE 19632983 C2
- EP 0775870 B1